# EUROPÄISCHE PATENTANMELDUNG

(11) **EP 3 556 219 A1**
(43) Veröffentlichungstag der Anmeldung: **23.10.2019**
(21) Anmeldenummer: 18000440.0
(22) Anmeldetag: 13.04.2018
(51) Int. Cl.: A23L 2/385, A23L 2/56, A23L 27/00, A23F 3/40, A23L 2/66

(54) **SIRUP ZUR AUFWERTUNG VON HEISSGETRÄNKEN ZU FITNESS-DRINKS**

(71) Anmelder: Traxler, Markus, 4264 Grünbach (AT)
(72) Erfinder: Traxler, Markus, 4264 Grünbach (AT)

(57) **Zusammenfassung**

Ein Sirup mit Bestandteilen sog. Energy-Drinks ist so hinsichtlich seiner Geschmacks- und Wirkstoff-Komponenten angepasst, dass er sich für Heißgetränke eignet.

## Beschreibung

### BEREICH DER ERFINDUNG

Die Erfindung betrifft Zusätze für Heißgetränke, wie insbesondere Tees und hier vor allem Zusätze, wie sie in sog. Energy-Drinks üblich und beliebt sind.

### HINTERGRUND DER ERFINDUNG / PROBLEMSITUATION

Sog. Energy-Drinks erfreuen sich zunehmender Beliebtheit dank ihrer anregenden Inhaltsstoffe wie Koffein-artige Substanzen, wie z.B. Guaraná. Daneben enthalten sie meist Taurin, dem Fitness- und Gesundheitsfördernde Wirkungen zugeschrieben werden:
"Zu den..klar definierten Aufgaben von Taurin im Stoffwechsel gehören die Bildung von Gallensäurenkonjugaten, die Beeinflussung der Signalübertragung und die potentielle Rolle bei der Entwicklung des Zentralnervensystems und der Herzfunktion.
Taurin stimuliert den Einstrom und die Membranbindung von Calcium. Außerdem unterstützt es die Bewegung von Natrium und Kalium durch die Zellmembran. Die dadurch unterstützte Stabilisierung des Membranpotentials weist eine Steigerung der Kontraktion und eine antiarrhythmische Wirkung am Herz auf. Taurin ist ein starkes Antioxidans und kann Gewebe vor oxidativen Schäden schützen [1] .... Taurinmangel führt im menschlichen Körper zu Störungen des Immunsystems. Außerdem wurde im Tierversuch eine entzündungshemmende Wirkung von Taurin festgestellt.[11] Eine Taurinverarmung der Gewebepools, vor allem des Lungengewebes, führt zu Entzündungen. Forscher der School of Pharmacy der Universität London stellten fest, dass Taurin durch Alkohol hervorgerufene Leberschäden mindern kann. [12] ".
Der Kombination von Taurin mit Coffein wird ein leistungssteigernder Effekt bei Ausdauer-Sportarten, aber auch bei der Büroarbeit nachgesagt (s.a. Patentschrift AT1914 2000: Verwendung von Taurin zur Verbesserung der Psychomotorischen Leistung und Koordination). Allerdings ist die Aufnahme bisher auf Kohlensäure-haltige Kaltgetränke beschränkt. Versuche in Tees und Kaffee erwiesen sich - offenbar durch Reaktionen der Inhaltsstoffe untereinander bei erhöhten Temperaturen - hinsichtlich Geschmack und Wirkung negativ. Andererseits zeigt das Zusammenwirken von Taurin mit Coffein-artigen Substanzen weniger unerwünschte Nebenwirkungen, als etwa erhöhte Dosen von Coffein, die vielfach Unruhe und Zittern hervorrufen.

### AUFGABENSTELLUNG

Es ist daher Aufgabe vorliegender Erfindung, eine Lösung für die Anwendung dieser Mischungen in Heißgetränken zu finden, die geschmacklich akzeptabel ist und die Wirkstoffe zur Geltung bringt.

Während nämlich der prickelnde Effekt der Kohlesäure in Fitess-Kaltgetränken die muffig wirkende Geschmackskomponenten von Coffein, Guaraná und Taurin überspielt, ist das bei Heißgetränken nicht möglich.
Auch eine gewisse Übersüßung , die dort die Bitterstoffe kompensiert die und durch den Genuss in möglichst eiskaltem Zustand weniger wahrgenommen wird, stößt bei Tee- und Kaffetrinkern auf Widerstand, die ihre gewohnten Anteil an Süßungsmitteln nicht verändern wollen - obgleich der Zusatz anderer Aromastoffe immer beliebter wird - man sieht dies am Erfolg der Starbucks-Kette.

### LOSUNG

Eine Lösung wurde darin gefunden, Wirkstoffe mit dumpf-bitteren Eigengeschmack, soweit gewünscht und erforderlich, zu verkapseln und alle in einem Sirup darzureichen, der sonst aus Fructose, und positiv wahrgenommenen Aromastoffen und Zusätzen besteht.

Diese Sirup sollte vorzugsweise in Portionsverpackungen pro Tasse zur Auflösung in Heißgetränken ausgeführt sein, und zwar in verschiedenen Darreichungsformen für Getränke wie Kaffee und Tees, um die zulässigen Konzentrationen von Coffein-artigen Substanzen nicht zu überschreiten.
Dabei sollten die Kapseln mit einer Größe von < 0,01 mm als solche im Sirup mit bloßem Auge nicht erkennbar sein und die Kapseln so ausgeführt werden, dass sie in Wasser mit geringer Konzentration anderer Inhaltsstoffe, wie z.B. Tees, weitgehend in der Schwebe bleiben und sich nicht am Tassenboden absetzen.

Der Sirup kann daher auch zuckerfrei und geschmacksneutral aus Gelantine und den Mikrokapseln bestehen.
Wird aber ein von Energy-Drinks bekannter Geschmack geschätzt und gewollt, kann auf die Verkapselung verzichtet werden und die Kompensation der Bitterstoffe durch erhöhte Anteile an Zucker, Fruchtsäuren und Ascorbinsäure erfolgen. Daneben sind auch alle Zwischenstufen möglich - je nach Geschmack der Verbraucher.
Zusätzlich ist, wie bei anderen Mikroverkapselungen, die Wirkung über ein Zeitfenster gut bestimmbar, indem zunächst unverkapselte Wirkstoffe durch die Mundschleimhaut und die Verkapselten je nach Zusammensetzung ihrer Hüllmaterialien, nach Auflösung im Magen oder im Darm in die Blutbahn gelangen - eine Technik, die bei Pharmazeutika als "Retard"-Wirkung schon lange üblich ist.

### DETAILLIERTE BESCHREIBUNG DER ERFINDUNG

Eine grundlegende Zusammensetzung des Sirups ist bei unverkapselter Ausführung: 88,12% Wasser, 11 % Zucker, 0,43% Aromastoffe, 0,2% Zitronensäure, 0,2% Taurin, 0,032 % Coffein und 0,02 % Ascorbinsäure.
In der verkapselten Ausführung kann der Zucker- wie auch der Fruchtsäureanteil stark verringert und durch Gelantine ersetzt sein.
Dieser Sirup ist zur Einmischung in Heißgetränke wie Tees darzubieten.
Als Zusätze sind für geschmackliche Varianten weitere Fruchtextrakte und Aromastoffe möglich.

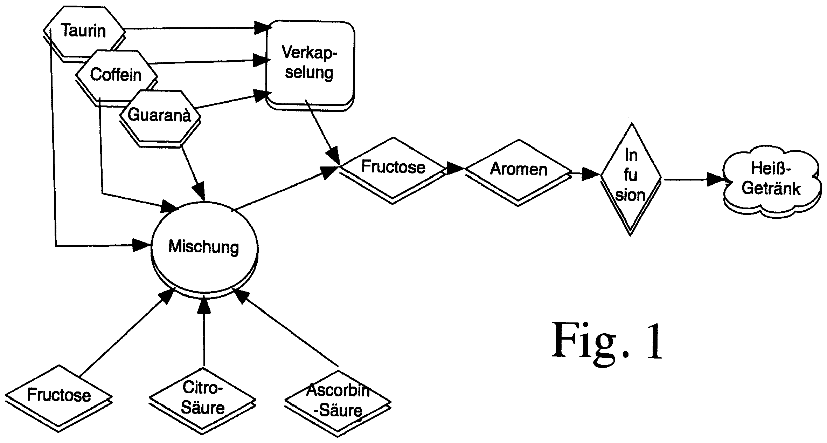

### Beschreibung der Zeichnung Fig. 1:

Die Wirkstoffe Taurin (1), Coffein (2) und Guaraná (3, optional) werden entweder in der Verkapselung (4) zur Vermeidung ihres bitteren Geschmacks oder in einer Mischung (5) zu dessen Überdeckung mit Traubenzucker/Fructose (6), Zitronensäure (7) und Ascorbinsäure (8) aufbereitet und weiter mit der Sirupbasis Fructose und/oder Gelantine (9),sowie nach Geschmack weiteren Aromen als Infusion10 dem Heißgetränk zugemischt.

### WEITERE AUSFÜHRUNG

In einer erweiterten Ausführung ist vorgesehen, Den Sirup in ausdrükbaren Portionsverpackungen darzureichen, um versehentliche Fehldosierungen zu verhindern.

## Patentansprüche

1. Sirup zur Aufwertung von Heißgetränken zu Fitness-Drinks, **dadurch gekennzeichnet, dass** darin enthaltene Alkaloide geschmacklich durch Fruchtzucker und Fruchtsäuren überdeckt oder verkapselt sind.

2. Sirup zur Aufwertung von Heißgetränken zu Fitness-Drinks nach Aspruch 1, **dadurch gekennzeichnet, dass** bittere Komponenten, wie Taurin, Coffein und Guaraná teilweise oder ganz in Mikrokapseln eingeschlossen sind.

3. Sirup zur Aufwertung von Heißgetränken zu Fitness-Drinks nach Anspruch 2, **dadurch gekennzeichnet, dass** die Kapseln durch die Magensäure und die Darm-Peristaltik aufgelöst werden.

4. Sirup zur Aufwertung von Heißgetränken zu Fitness-Drinks nach Anspruch 2, **dadurch gekennzeichnet, dass** die Wirkzeit der Inhaltsstoffe durch ihre Resorption in der Mundschleimhaut, im Magen und im Darm bestimmt werden kann.

5. Sirup zur Aufwertung von Heißgetränken zu Fitness-Drinks nach Anspruch 2, **dadurch gekennzeichnet, dass** der Sirup in Portionsverpackungen konfektioniert ist.

6. Sirup zur Aufwertung von Heißgetränken zu Fitness-Drinks nach Aspruch 1, **dadurch gekennzeichnet, dass** die Portion pro Tasse mit 2 cl vorgegeben ist.

7. Als Sirup oder auch nur in verkapselter Form für Heiß-Kalt Getränke und Milchprodukte.
